# FASCICULE DE BREVET EUROPEEN

(11) **EP 3 102 406 B1**
(45) Date de publication et mention de la délivrance du brevet: **25.10.2017**
(21) Numéro de dépôt: 15702767.3
(22) Date de dépôt: 05.02.2015
(51) Int. Cl.: B32B 15/06, B32B 7/12, C08J 5/12, B60C 9/00, C09J 161/12

(54) **COMPOSITE DE CAOUTCHOUC RENFORCÉ D'AU MOINS UN ÉLÉMENT DE RENFORT EN ACIER ADHÉRISÉ PAR UNE COMPOSITION ADHÉSIVE À BASE D'ALDÉHYDE AROMATIQUE ET DE POLYPHÉNOL**
MIT EINER HAFTSTOFFZUSAMMENSETZUNG MIT AROMATISCHEM ALDEHYD UND POLYPHENOL HAFTEND GEMACHTE KAUTSCHUKZUSAMMENSETZUNG MIT MINDESTENS EINEM STAHLVERSTÄRKUNGSELEMENT
RUBBER COMPOSITE REINFORCED BY AT LEAST ONE STEEL REINFORCING ELEMENT RENDERED ADHESIVE BY AN ADHESIVE COMPOSITION CONTAINING AROMATIC ALDEHYDE AND POLYPHENOL

(30) Priorité: 06.02.2014 FR 1450902
(43) Date de publication de la demande: 14.12.2016
(73) Titulaire: Compagnie Générale des Etablissements Michelin, 63000 Clermont-Ferrand (FR)
(72) Inventeur: MICHOUD, Clément, F-63040 Clermont-Ferrand Cedex 9 (FR); DOISNEAU, David, F-63040 Clermont-Ferrand Cedex 9 (FR)
(74) Mandataire: Desbordes, Guillaume
(86) Numéro de dépôt international: PCT/EP2015/052361
(87) Numéro de publication internationale: WO 2015/118042

(56) Documents cités:
- EP-A2- 2 006 341
- WO-A1-99/02583
- WO-A1-2012/112240
- WO-A1-2013/017422
- WO-A1-2013/017423
- US-A- 2 343 551
- DATABASE WPI Week 201353 Thomson Scientific, London, GB; AN 2012-R49625 XP002730971, & CN 102 718 934 A (BEIJING RED AVENUE INNOVA CO LTD) 10 octobre 2012 (2012-10-10)
- DATABASE WPI Week 198125 Thomson Scientific, London, GB; AN 1981-44855D XP002730973, & JP S56 47470 A (NAGOYA YUKAGAKU KOGYO KK) 30 avril 1981 (1981-04-30)
- DATABASE WPI Week 201356 Thomson Scientific, London, GB; AN 2013-G00913 XP002730974, & CN 102 875 754 A (BEIJING RED AVENUE INNOVA CO LTD) 16 janvier 2013 (2013-01-16)
- W. J Van Ooij: "Mechanism and Theories of Rubber Adhesion to Steel Tire Cords - An Overview", , 1 January 1984 (1984-01-01), XP55028593, DOI: 10.5254/1.3536016 Retrieved from the Internet: URL:http://rubberchemtechnol.org/doi/pdf/1 0.5254/1.3536016 [retrieved on 2012-05-31]

## Description

Le domaine de la présente invention est celui des éléments de renfort métalliques et des compositions adhésives ou « colles » destinées à faire adhérer de tels éléments de renfort métalliques à des matrices de caoutchouc insaturé telles que celles utilisées couramment dans les articles ou produits semi-finis en caoutchouc.

La présente invention est plus particulièrement relative à des composites de caoutchouc renforcés par des éléments de renfort en acier revêtus par des couches adhésives à base d'une résine phénol-aldéhyde, notamment des pneumatiques renforcés par de tels composites de caoutchouc.

On connait de l'état de la technique des éléments de renfort en acier pour pneumatique comprenant un ou plusieurs éléments de renfort filaires en acier, par exemple des fils en acier.

Une première solution pour faire adhérer ces fils en acier à des compositions de caoutchouc est d'utiliser des colles connues sous la dénomination « RFL » (pour résorcinol-formaldéhyde-latex), comme par exemple dans EP2006341. Ces colles RFL comprennent de manière bien connue une résine phénolique thermodurcissable, obtenue par la condensation du résorcinol avec le formaldéhyde, et un ou plusieurs latex de caoutchouc diénique en solution aqueuse.

Les colles RFL de EP2006341 assurent une bonne adhésion du ou des fils en acier revêtus à des matrices de caoutchouc sans que ces derniers ne soient traités en surface, c'est-à-dire en l'absence d'une couche d'un revêtement métallique, par exemple une couche de laiton. Toutefois, la colle RFL nécessite l'utilisation d'un polymère halogéné et d'un oxyde métallique. En outre, cette colle RFL nécessite l'utilisation d'une matrice de caoutchouc comprenant une composition de caoutchouc acrylique et ne permet donc pas une adhésion satisfaisante avec n'importe quelle matrice de caoutchouc.

Une deuxième solution pour faire adhérer ces fils en acier à des compositions de caoutchouc est de revêtir les éléments de renfort en acier d'une couche de laiton. Cette deuxième solution est la solution industrielle la plus répandue et la plus efficace. Lors de la cuisson du pneumatique, on forme une interface adhésive comprenant de l'oxyde de zinc, du sulfure de zinc et du sulfure de cuivre issus de la réaction entre le laiton et la composition de caoutchouc. Une telle interface et les mécanismes physico-chimiques correspondants sont notamment décrits dans l'article « Mechanism and theories of rubber adhesion to steel cords - An overview », W. J. Van Ooij, Rubber Chemistry and Technology, 421-456, Vol.57.

Toutefois, il est nécessaire, notamment pour la formation des sulfures de cuivre et de zinc, de disposer d'une matrice de caoutchouc à base d'une composition de caoutchouc comprenant un système de réticulation comprenant un fort taux de soufre moléculaire compris entre 6 et 12 pce. Toutefois, une telle matrice de caoutchouc présente, en raison du fort taux de soufre moléculaire, une durée de stockage limitée à cause des risques de pré-vulcanisation de la composition de caoutchouc à température ambiante.

Ainsi, les concepteurs d'articles en caoutchouc, notamment les manufacturiers de pneumatiques, ont pour objectif aujourd'hui de trouver de nouveaux systèmes adhésifs simples permettant de faire adhérer de façon satisfaisante les éléments de renfort métalliques aux matrices de caoutchouc sans que celles-ci ne soient nécessairement à base d'une composition de caoutchouc acrylique ou que l'on doive utiliser la colle en association avec un polymère halogéné et un oxyde métallique. En outre, on souhaite pouvoir disposer d'une matrice de caoutchouc présentant une durée de stockage aussi longue que possible.

Or, au cours de leurs recherches, les Demanderesses ont découvert une composition adhésive permettant de répondre à l'objectif ci-dessus.

Ainsi, un premier objet de l'invention concerne un composite de caoutchouc renforcé d'au moins un élément de renfort en acier revêtu au moins en partie d'une couche adhésive, le composite de caoutchouc renforcé comprenant une matrice de caoutchouc dans laquelle est noyé l'élément de renfort en acier revêtu, la couche adhésive comprenant une composition adhésive comportant au moins une résine phénol-aldéhyde à base d'au moins :
- un aldéhyde aromatique porteur d'au moins une fonction aldéhyde, comprenant au moins un noyau aromatique;
- un polyphénol comportant un ou plusieurs noyau(x) aromatique(s), étant entendu que :
   ∘ dans le cas d'un seul noyau aromatique, ce dernier est porteur de deux ou trois fonctions hydroxyles en position méta l'une par rapport à l'autre ou les unes par rapport aux autres, le reste du noyau aromatique étant non substitué ;
   ∘ dans le cas de plusieurs noyaux aromatiques, au moins deux d'entre eux sont chacun porteur de deux ou trois fonctions hydroxyles en position méta l'une par rapport à l'autre ou les unes par rapport aux autres, étant entendu que les deux positions en ortho d'au moins une de ces fonctions hydroxyles sont non substituées
la matrice de caoutchouc étant à base d'une composition de caoutchouc comprenant un système de réticulation comprenant un taux de soufre moléculaire allant de 1 à 5 pce.

L'invention concerne également un procédé de fabrication d'un composite de caoutchouc renforcé d'au moins un élément de renfort en acier revêtu au moins en partie d'une couche adhésive comprenant une composition adhésive telle que décrite ci-dessus. Le procédé selon l'invention comporte une étape dans laquelle on noie l'élément de renfort en acier revêtu au moins en partie de la couche adhésive dans une matrice de caoutchouc à base d'une composition de caoutchouc comprenant un système de réticulation comprenant un taux de soufre moléculaire allant de 1 à 5 pce.

En outre, l'invention concerne l'utilisation, pour le calandrage d'un élément de renfort en acier revêtu au moins en partie d'une couche adhésive comprenant une composition adhésive telle que décrite ci-dessus, d' une matrice de caoutchouc à base d'une composition de caoutchouc comprenant un système de réticulation comprenant un taux de soufre moléculaire allant de 1 à 5 pce.

Un autre objet de l'invention est un pneumatique comprenant au moins un composite de caoutchouc tel que décrit ci-dessus.

L'invention concerne donc tout composite (article ou produit semi-fini) en caoutchouc, en particulier tout pneumatique, avant comme après cuisson (pour réticulation ou vulcanisation finale), comportant un élément de renfort en acier revêtu tel que décrit ci-dessus.

L'invention concerne également l'utilisation d'un composite de caoutchouc tel que décrit ci-dessus dans des pneumatiques, notamment ceux destinés à équiper des véhicules à moteur de type tourisme, SUV ("*Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention ainsi que ses avantages seront aisément compris à la lumière de la description et des exemples de réalisation qui suivent.

Dans la présente description, sauf indication expresse différente, tous les pourcentages (%) indiqués sont des % en masse.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I - COMPOSITE DE CAOUTCHOUC

Par l'expression « composition à base de », il faut bien entendu comprendre une composition comportant le mélange et/ou le produit de réaction des différents constituants de base utilisés pour cette composition, certains d'entre eux pouvant être destinés à réagir ou susceptibles de réagir entre eux ou avec leur environnement chimique proche, au moins en partie, lors des différentes phases de fabrication de la composition, de l'élément de renfort, des composites ou articles finis, en particulier au cours d'une étape de cuisson.

Habituellement, pour la réticulation des compositions de caoutchouc, on utilise un système de réticulation comprenant du soufre moléculaire. Par soufre moléculaire, on entend du soufre issus d'un composé Sₙ avec n>2. Le soufre moléculaire est habituellement ajouté à un taux compris entre 6 et 12 pce dans le système de réticulation. Dans l'invention, le système de réticulation comprend un taux de soufre moléculaire allant de 1 à 5 pce. Une quantité de soufre moléculaire, non partie au système de réticulation, est potentiellement présente dans la composition de caoutchouc, ce soufre moléculaire pouvant provenir des autres composants de la composition, introduits en phase dite « non productive » de la préparation (voir ci-dessous le paragraphe II). Par exemple, il peut notamment provenir du noir de carbone. Dans la composition de caoutchouc du composite selon l'invention, le taux de soufre moléculaire dans la composition va de 3 à 7 pce.

Avantageusement, le taux de soufre moléculaire du système de réticulation de la composition de caoutchouc est inférieur ou égal à 4 pce, de préférence à 3 pce et plus préférentiellement à 2,5 pce.

Avantageusement, le taux de soufre moléculaire du système de réticulation de la composition de caoutchouc est supérieur ou égal à 1,5 pce, de préférence à 2 pce.

De préférence, la composition de caoutchouc comprend au moins un élastomère diénique.

L'élastomère diénique du composite est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères.

La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute Tg supérieure à 300°C, des agents facilitant la mise en oeuvre (processabilité) des compositions à l'état cru, des résines tackifiantes, des agents anti-réversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment des sels de cobalt, de nickel ou de lanthanide, un système de réticulation ou de vulcanisation.

De préférence, le système de réticulation est un système dit de vulcanisation, c'est-à-dire à base de soufre moléculaire et d'un accélérateur primaire de vulcanisation. A ce système de vulcanisation de base peuvent s'ajouter divers accélérateurs secondaires ou activateurs de vulcanisation connus ainsi que des retardateurs. L'accélérateur primaire, par exemple un sulfénamide, est utilisé à un taux préférentiel allant de 0,5 à 10 pce. La composition peut également comprendre un retardateur, utilisé à un taux préférentiel allant de 0,1 à 3 pce. L'ensemble des accélérateurs, retardateurs et activateurs de vulcanisation est utilisé à un taux préférentiel allant de 0,5 à 15 pce.

Le taux de charge renforçante, par exemple du noir de carbone ou de la silice, est de préférence supérieur à 50 pce, notamment compris entre 50 et 150 pce. Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogenées présentant une surface BET inferieure a 450 m²/g, de préférence de 30 à 400 m²/g.

L'homme de l'art saura, à la lumière de la présente description, ajuster la formulation de la composition de caoutchouc afin d'atteindre les niveaux de propriétés (notamment module d'élasticité) souhaités, et adapter la formulation à l'application spécifique envisagée.

L'élément de renfort en acier revêtu peut comprendre, dans un mode de réalisation, un unique élément de renfort filaire. Dans un autre mode de réalisation, l'élément de renfort en acier revêtu comprend plusieurs éléments de renfort filaires assemblés ensemble, par exemple par câblage ou retordage. Parmi les éléments de renfort en acier revêtus comprenant plusieurs éléments de renfort filaires, on citera par exemple les câbles à couches et les câbles multi-torons. Chaque élément de renfort filaire est unitaire, c'est-à-dire que les constituants de chaque élément de renfort filaire sont indissociables les uns des autres.

Par élément de renfort filaire, on entend les éléments longilignes de grande longueur relativement à leur section transversale, quelle que soit la forme de cette dernière, par exemple circulaire, oblongue, rectangulaire ou carrée, ou même plate, cet élément filaire pouvant être rectiligne comme non rectiligne, par exemple torsadé, ou ondulé. Lorsqu'il est de forme circulaire, le diamètre de chaque élément de renfort filaire est de préférence inférieur à 5 mm, plus préférentiellement compris dans un domaine allant de 0,1 à 0,5 mm. On citera également les feuillards ou les bandes qui présentent une grande longueur par rapport à leur épaisseur.

La couche adhésive revêt au moins une partie du ou de chaque élément de renfort filaire. Ainsi, la couche adhésive peut revêtir partiellement ou en totalité le ou chaque élément de renfort filaire. Ainsi, dans le mode de réalisation dans lequel l'élément de renfort en acier revêtu comprend un unique élément de renfort filaire, la couche adhésive peut revêtir certaines parties de cet élément ou bien sa totalité. Dans le mode de réalisation dans lequel l'élément de renfort en acier revêtu comprend plusieurs éléments de renfort filaires, la couche adhésive peut revêtir plusieurs éléments filaires sans en revêtir d'autres ou bien revêtir uniquement certaines parties de certains ou de tous les éléments filaires.

Dans un mode de réalisation préféré, l'élément de renfort en acier revêtu comprend un ou plusieurs éléments de renfort filaires comprenant chacun une âme en acier. L'âme en acier est monolithique, c'est-à-dire qu'elle est par exemple venue de matière ou de moulage.

L'acier peut présenter une microstructure perlitique, ferritique, austénitique, bainitique, martensitique ou une microstructure issue d'un mélange de ces microstructures.

De préférence, l'acier comprend un taux de carbone allant de 0,2 % à 1 % en masse et plus préférentiellement de 0,3 % à 0,7 % en masse. De préférence, l'acier comprend un taux de manganèse allant de 0,3 % à 0,7 % en masse, un taux de silicium allant de 0,1 % à 0,3 % en masse, un taux de phosphore allant au plus jusqu'à 0,045 % borne incluse en masse, un taux de soufre allant au plus jusqu'à 0,045 % borne incluse en masse et un taux d'azote allant au plus jusqu'à 0,008 % borne incluse en masse. De façon optionnelle, l'acier comprend au plus 0,1 % borne incluse, de préférence 0,05 % borne incluse, et plus préférentiellement 0,02 % borne incluse en masse de vanadium et/ou de molybdène.

Dans un mode de réalisation, l'acier utilisé comprend moins de 0,5 %, de préférence au plus 0,05 % borne incluse, et plus préférentiellement au plus 0,02 % borne incluse en masse de chrome.

Dans un autre mode de réalisation utilisant de l'acier dit inoxydable, l'acier comprend au moins 0,5 % borne incluse, de préférence au moins 5 % borne incluse et plus préférentiellement au moins 15 % borne incluse en masse de chrome.

De préférence, un acier inoxydable comprend au moins 2% borne incluse, de préférence au moins 4% borne incluse et plus préférentiellement au moins 6% en masse de nickel.

Dans un mode de réalisation, la couche adhésive revêt directement au moins une partie de l'âme en acier du ou de chaque élément de renfort filaire. Ainsi, dans ce mode de réalisation, l'élément de renfort revêtu est dépourvu de couche intermédiaire non métallique et de couche d'un revêtement métallique qui serait intercalée entre l'acier de l'âme du ou de chaque élément de renfort filaire et la couche adhésive comprenant la composition adhésive.

Dans un autre mode de réalisation, la couche adhésive revêt directement une couche d'un revêtement métallique revêtant directement au moins une partie de l'âme en acier du ou de chaque élément de renfort filaire. Le métal de la couche du revêtement métallique est réalisé dans un métal différent de l'acier.

De préférence, le métal de la couche du revêtement métallique revêtant directement au moins une partie de l'âme en acier du ou de chaque élément de renfort filaire est choisi parmi le zinc, le cuivre, l'étain et les alliages de ces métaux. Comme exemples d'alliages de ces métaux, on citera le laiton et le bronze.

Dans un autre mode de réalisation, la couche adhésive revêt directement une couche intermédiaire d'adhésion non métallique revêtant au moins une partie de l'âme en acier du ou de chaque élément de renfort filaire. Dans une variante de ce mode de réalisation, la couche intermédiaire d'adhésion non métallique revêt directement au moins une partie de l'âme en acier du ou de chaque élément de renfort filaire. Dans une autre variante de ce mode de réalisation, la couche intermédiaire d'adhésion non métallique revêt directement au moins une partie de la couche du revêtement métallique revêtant directement au moins une partie de l'âme en acier du ou de chaque élément de renfort filaire. La couche intermédiaire non métallique, généralement appelée primaire d'adhésion, permet, en combinaison avec la couche adhésive comprenant la composition adhésive, d'améliorer l'adhésion de l'élément de renfort en acier revêtu à la matrice de caoutchouc. De tels primaires d'adhésion sont ceux couramment utilisés par l'homme du métier pour le pré-encollage de certaines fibres textiles (fibres en polyester, par exemple PET, en aramide, en aramide/nylon). Par exemple, on pourra utiliser un primaire à base d'époxy, notamment à base de polyglycérol polyglycidyl éther. On pourra également utiliser un primaire à base d'isocyanate bloqué.

Par couche revêtant « directement » un objet ou revêtement revêtant « directement » un objet, on entend que la couche ou le revêtement est au contact de l'objet sans qu'aucun autre objet, notamment une autre couche ou un autre revêtement ne soit interposé entre les deux.

La composition adhésive comprend donc au moins une (c'est-à-dire une ou plusieurs) résine phénol-aldéhyde à base d'au moins un (c'est-à-dire un ou plusieurs) aldéhyde aromatique et au moins un (c'est-à-dire un ou plusieurs) polyphénol, constituants qui vont être décrits en détail ci-après.

### 1.1 - Aldéhyde aromatique

Le premier constituant de la résine phénol-aldéhyde est un aldéhyde aromatique porteur d'au moins une fonction aldéhyde, comprenant au moins un noyau aromatique.

Selon un mode de réalisation préférentiel, le noyau aromatique est porteur de la fonction aldéhyde.

De préférence, l'aldéhyde aromatique est porteur d'au moins deux fonctions aldéhydes. Préférentiellement, le noyau aromatique de l'aldéhyde aromatique est porteur de deux fonctions aldéhydes, ces dernières pouvant être en position ortho, méta ou para sur le noyau aromatique.

Préférentiellement le noyau aromatique de l'aldéhyde aromatique est un noyau benzénique. Dans certains modes de réalisation, cet aldéhyde aromatique est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde, et les mélanges de ces composés.

Encore plus préférentiellement le polyaldéhyde aromatique utilisé est le 1,4-benzène-dicarboxaldéhyde, encore appelé téréphtaldéhyde, pour rappel de formule chimique développée :

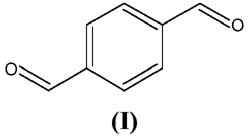

Dans d'autres modes de réalisation, l'aldéhyde aromatique présente la formule **(A)**: 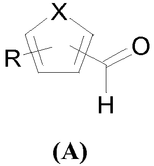 dans laquelle X comprend N, S ou O et R représente -H ou -CHO.

De tels aldéhydes aromatiques sont issus de ressources renouvelables et pas du pétrole. Les aldéhydes aromatiques sont par exemple issus de la bio-ressource ou de produits de transformation de la bio-ressource.

Préférentiellement, l'aldéhyde aromatique est de formule générale **(A')**:

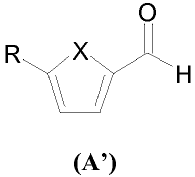

Selon un mode de réalisation préférentiel, X représente O.

Dans une variante de l'aldéhyde aromatique de formule générale **(A)**, X représente O et R représente -H. L'aldéhyde aromatique utilisé est alors de formule **(B1)**:

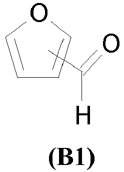

Dans une variante de l'aldéhyde aromatique de formule générale **(A')**, X représente O et R représente -H. L'aldéhyde aromatique utilisé est alors le furfuraldéhyde et est de formule **(B'1)**:

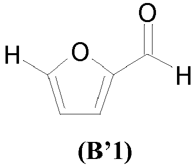

Dans une autre variante de l'aldéhyde aromatique de formule générale **(A)**, X représente O et R représente -CHO. L'aldéhyde aromatique utilisé est alors de formule **(B2):**

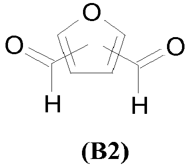

Dans une autre variante de l'aldéhyde aromatique de formule générale **(A')**, X représente O et R représente -CHO. L'aldéhyde aromatique utilisé est alors le 2,5-furanedicarboxaldéhyde et est de formule **(B'2):**

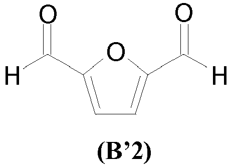

Dans un autre mode de réalisation, X comprend N.

Dans une variante de l'aldéhyde aromatique de formule générale **(A)**, X représente NH. L'aldéhyde aromatique utilisé est de formule **(C1)**:

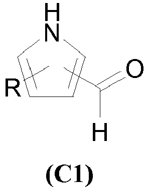

Dans une variante de l'aldéhyde aromatique de formule générale **(A')**, X représente NH. L'aldéhyde aromatique utilisé est de formule **(C'1)**:

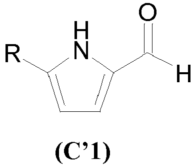

De préférence, R représente -CHO dans la variante de l'aldéhyde aromatique de formule **(C'1)** et l'aldéhyde aromatique obtenu est alors le 2,5-1H-pyrroledicarboxaldéhyde.

Dans une autre variante de l'aldéhyde aromatique de formule générale **(A)**, X représente NR1 avec R1 représentant un groupe alkyle, aryle arylalkyle, alkylaryle ou cycloalkyle. L'aldéhyde aromatique utilisé est de formule **(C2):**

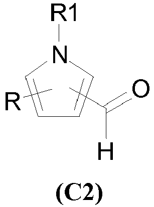

Dans un autre mode de réalisation, X comprend S.

Dans une variante de l'aldéhyde aromatique de formule générale **(A)**, X représente S. L'aldéhyde aromatique utilisé est de formule **(D1)**:

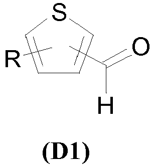

Dans une variante de l'aldéhyde aromatique de formule générale **(A')**, X représente S. L'aldéhyde aromatique utilisé est de formule **(D'1)**:

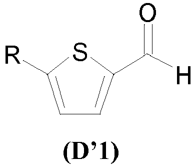

De préférence, R représente -CHO dans la variante de l'aldéhyde aromatique de formule **(D'1)** et est alors le 2,5-thiophènedicarboxaldéhyde.

Dans une autre variante de l'aldéhyde aromatique de formule générale **(A)**, X représente SR2 avec R2 représentant un groupe alkyle, aryle arylalkyle, alkylaryle ou cycloalkyle. L'aldéhyde aromatique utilisé est de formule **(D2):**

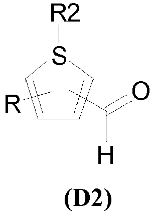

Dans encore une autre variante de l'aldéhyde aromatique de formule générale **(A)**, X représente R3-S-R2 avec R2, R3 représentant chacun indépendamment l'un de l'autre un groupe alkyle, aryle arylalkyle, alkylaryle ou cycloalkyle. L'aldéhyde aromatique utilisé est de formule **(D3):**

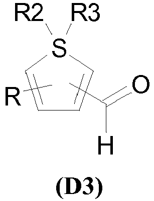

Dans encore une autre variante de l'aldéhyde aromatique de formule générale **(A)**, X représente S=O. L'aldéhyde aromatique utilisé est de formule **(D4):**

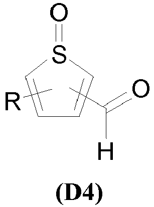

Dans encore une autre variante de l'aldéhyde aromatique de formule générale **(A)**, X représente O=S=O. L'aldéhyde aromatique utilisé est de formule **(D5):**

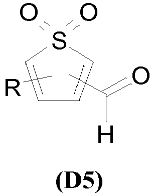

Parmi les différents modes de réalisation décrits ci-dessus, on préférera les modes de réalisation et les variantes dans lesquels X représente NH, S ou O. Dans ces modes de réalisation et variantes, on pourra avoir R représentant -H ou -CHO et de préférence R représentant -CHO. Dans ces modes de réalisation et variantes, on aura préférentiellement R en position 5 et le groupe -CHO en position 2 sur le noyau aromatique (formule générale **(A')).**

La résine phénol-aldéhyde pourra comprendre un mélange des composés indiqués ci-dessus, en particulier un mélange de furfuraldéhyde et de 2,5-furanedicarboxaldéhyde.

De préférence, lorsque la résine phénol-aldéhyde est à base d'un unique aldéhyde aromatique, la composition est dépourvue de formaldéhyde.

Lorsque la résine phénol-aldéhyde est à base de plusieurs aldéhydes, dont au moins l'un est un aldéhyde aromatique, chaque aldéhyde est préférentiellement différent du formaldéhyde. La composition est alors également préférentiellement dépourvue de formaldéhyde.

En d'autres termes et de manière préférée, le ou chaque aldéhyde de la résine phénol-aldéhyde est différent du formaldéhyde.

Par dépourvue de formaldéhyde, on entend que le taux massique de formaldéhyde en poids total du ou des aldéhydes est strictement inférieur à 1%.

Dans certains modes de réalisation, la composition peut comprendre du formaldéhyde. De préférence, la composition comprend alors un taux massique de formaldéhyde en poids total du ou des aldéhydes est inférieur ou égal à 10%, de préférence à 5% et plus préférentiellement à 2%.

### I.2 - Polyphénol

Le deuxième constituant de la résine phénol-aldéhyde est un polyphénol comportant un ou plusieurs noyau(x) aromatique(s).

Dans le cas d'un polyphénol comportant un seul noyau aromatique, ce dernier est porteur de deux ou trois fonctions hydroxyles en position méta l'une par rapport à l'autre (dans le cas de deux fonctions) ou les unes par rapport aux autres (dans le cas de trois fonctions), le reste du noyau aromatique étant par définition non substitué ; on entend par là que les autres atomes de carbone du reste du noyau aromatique (ceux autres que les atomes de carbone porteurs des fonctions hydroxyles) sont porteurs d'un simple atome d'hydrogène.

A titre d'exemple préférentiel de polyphénol comportant un seul noyau aromatique, on peut citer en particulier le résorcinol, pour rappel de formule développée :

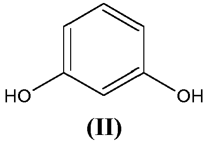

A titre d'exemple encore plus préférentiel comportant un seul noyau aromatique, on peut citer le phloroglucinol, pour rappel de formule développée :

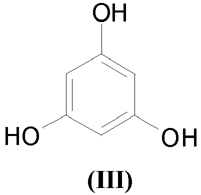

Dans le cas d'un polyphénol comportant plusieurs (deux ou plus de deux) noyaux aromatiques, au moins deux d'entre eux sont chacun porteur de deux ou trois fonctions hydroxyles en position méta l'une par rapport à l'autre (dans le cas de deux fonctions), ou les unes par rapport aux autres (dans le cas de trois fonctions), étant entendu que les deux positions en ortho d'au moins une de ces fonctions hydroxyles sont non substituées ; on entend par là que les deux atomes de carbone situés de part et d'autre (en position ortho) de l'atome de carbone hydroxylé (i.e., porteur de la fonction hydroxyle) sont porteurs d'un simple atome d'hydrogène.

A titres d'exemples préférentiels, dans le cas où la molécule de polyphénol comporte plusieurs noyaux aromatiques, au moins deux de ces noyaux aromatiques, identiques ou différents, sont choisis parmi ceux de formules générales : 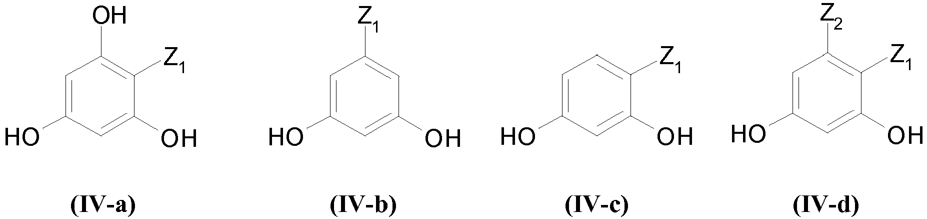 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste de la molécule polyphénol.

Selon un mode de réalisation particulier et préférentiel de l'invention, le polyphénol est par exemple un flavonoïde, caractérisé pour rappel par une structure de base à 15 atomes de carbone, formée par deux cycles benzéniques reliés par trois atomes de carbone. Plus particulièrement, le flavonoïde utilisé est le 2',4',3, 5, 7-pentahydroxyflavone, appelé aussi « Morin », de formule **(V)** ci-après :

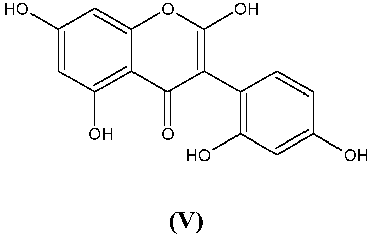

On note que ce composé est un polyphénol comportant deux noyaux aromatiques (de formules respectives **IV-c** et **IV-d** ci-dessus) dont chacun est bien porteur de deux fonctions hydroxyles en position méta l'une par rapport à l'autre, les deux positions en ortho d'au moins une de ces deux fonctions hydroxyles étant non substituées.

Selon un autre mode de réalisation particulier et préférentiel de l'invention, le polyphénol est par exemple le phloroglucide, encore appelé 2,4,6,3',5'-biphénylpentol, de formule développée suivante :

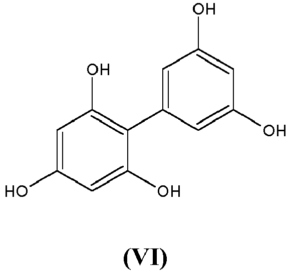

On note que ce composé est un polyphénol comportant deux noyaux aromatiques (de formules respectives **IV-a** et **IV-b** ci-dessus) dont chacun est bien porteur d'au moins deux (en l'occurrence, un porteur de deux, l'autre porteur de trois) fonctions hydroxyles en position méta l'une par rapport à l'autre, les deux positions en ortho d'au moins une de ces deux fonctions hydroxyles étant non substituées.

Selon encore un autre mode de réalisation particulier et préférentiel de l'invention, le polyphénol est par exemple le 2,2',4,4'-tétrahydroxydiphényl sulfide de formule développée suivante :

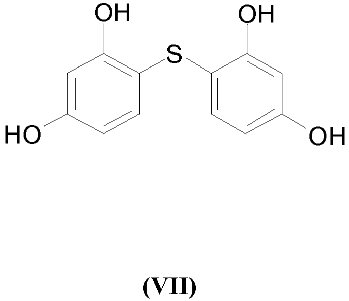

Dans un mode de réalisation préférentiel, le polyphénol est choisi dans le groupe constitué par le phloroglucinol **(III),** le 2,2',4,4'-tétrahydroxydiphényl sulfide **(VII)** et les mélanges de ces composés.

### I.3 - Latex d'élastomère insaturé

On rappelle qu'un latex est une dispersion stable de microparticules d'élastomère(s) en suspension dans une solution aqueuse.

Les latex d'élastomère insaturé (c'est-à-dire porteur de doubles liaisons carbone-carbone), notamment d'élastomère diénique, sont bien connus de l'homme du métier.

De préférence, la composition adhésive comporte un latex d'élastomère insaturé. L'élastomère insaturé du latex est préférentiellement un élastomère diénique, plus préférentiellement un élastomère diénique choisi dans le groupe constitué par les polybutadiènes, les copolymères de butadiène, les polyisoprènes, les copolymères d'isoprène et les mélanges de ces élastomères. Il est encore plus préférentiellement choisi dans le groupe constitué par les copolymères de butadiène, les terpolymères vinylpyridine-styrène-butadiène, le caoutchouc naturel, et les mélanges de ces élastomères.

### I.4 - Additifs - Fabrication de la composition adhésive

La composition adhésive et/ou sa résine phénol-aldéhyde et/ou son latex d'élastomère insaturé de départ, peuvent bien entendu comporter tout ou partie des additifs habituels pour compositions adhésives telles que ceux utilisés dans les colles RFL conventionnelles ; on citera par exemple des bases telles que ammoniaque, hydroxyde de sodium, de potassium ou d'ammonium, des colorants, charges telles que noir de carbone ou silice, antioxydants ou autre stabilisants.

Typiquement, lors d'une première étape de fabrication, on prépare la résine elle-même en mélangeant progressivement le polyphénol et l'aldéhyde aromatique dans un solvant basique tel qu'une solution aqueuse de soude, ayant de préférence un pH compris entre 9 et 13, plus préférentiellement entre 10 et 12. L'ensemble des constituants est mélangé sous agitation pendant un temps variable selon la température utilisée et la composition spécifique visée, par exemple pendant une durée pouvant varier entre 1 min et 6 h, à une température comprise entre 15°C et 90°C, préférentiellement entre 20°C et 60°C.

La résine phénol-aldéhyde ainsi précondensée est généralement diluée dans l'eau de façon à obtenir une composition adhésive aqueuse. Puis, on ajoute un latex ou des latex (s'ils sont plusieurs) d'élastomère(s) insaturé(s) pour constituer la composition adhésive aqueuse, selon un mode opératoire général qui est bien connu de l'homme du métier dans le domaine des colles RFL.

Par exemple, les constituants de la composition adhésive sont ajoutés dans l'ordre suivant : l'eau, d'éventuels additifs solubles dans l'eau (par exemple ammoniaque), le ou les latex (peu importe l'ordre), la résine phénol-aldéhyde (diluée). L'ensemble est mélangé sous agitation pendant 1 à 30 min, par exemple à 23°C.

Lors d'une dernière étape de fabrication, la composition adhésive est généralement stockée à température ambiante (23°C) pendant un temps de maturation pouvant varier typiquement de 1 à plusieurs heures voire plusieurs jours, avant son utilisation finale.

Dans la composition adhésive finale ainsi préparée, le taux d'extrait sec de résine phénol-aldéhyde représente de préférence entre 5 et 60 %, plus préférentiellement entre 10 et 30 % en poids de l'extrait sec de composition adhésive.

Le taux d'élastomère insaturé (c'est-à-dire l'extrait sec du ou des latex) est quant à lui compris de préférence entre 40 et 95 %, plus préférentiellement entre 70 et 90 %, en poids de l'extrait sec de la composition adhésive.

Le rapport pondéral de polyphénol sur aldéhyde aromatique est préférentiellement compris entre 0,1 et 3, plus préférentiellement entre 0,25 et 2.

Le rapport pondéral de l'extrait sec de résine sur l'extrait sec de latex est de préférence compris entre 0,1 et 2,0, plus préférentiellement entre 0,15 et 1,0.

La teneur en eau de la composition adhésive est de préférence comprise entre 60 et 90 %, plus préférentiellement entre 60 et 85 %.

Avantageusement, la composition adhésive comprend une gélatine. La gélatine permet de ralentir le démouillage des éléments de renfort filaires et donc d'assurer une meilleure adhésion entre l'élément de renfort en acier et la matrice de caoutchouc. Par gélatine, on entend tout mélange de protéines comprenant des produits de l'hydrolyse totale ou partielle de collagène.

### II - PROCEDE DE FABRICATION DU COMPOSITE DE CAOUTCHOUC

Au cours du procédé décrit précédemment, on revêt au moins une partie de l'élément de renfort en acier par la couche adhésive comprenant la composition adhésive décrite ci-dessus.

Préalablement à l'étape de revêtement de l'élément de renfort en acier par la couche adhésive comprenant la composition adhésive, chaque élément de renfort filaire pourra subir des étapes de traitement, par exemple de décalaminage, de tréfilage en milieu humide ou en milieu sec ou encore de traitement thermique. Des exemples de ces étapes de traitement sont notamment décrits dans les documents US20100170624, US5535612 ou encore JP2000219938.

L'étape de revêtement peut être effectuée selon toute méthode appropriée, notamment par toute technique d'enduction connue telle que par exemple pulvérisation, imprégnation par trempage, défilement dans un bain ou autre technique équivalente de dépôt de film de composition mince ou ultra-mince, ou encore par une combinaison d'une ou plusieurs de ces techniques.

Le poids d'extrait sec de la composition adhésive déposée sur un kilogramme d'élément de renfort filaire en acier non revêtu est de préférence compris entre 2 et 100 g, plus préférentiellement entre 2 et 50 g, encore plus préférentiellement entre 3 et 15 g.

Après l'étape précédemment décrite de revêtement de l'élément de renfort en acier par la composition adhésive, l'élément de renfort en acier revêtu subit un premier traitement thermique visant à éliminer tout solvant ou eau, à une température comprise de préférence entre 110°C et 260°C, plus préférentiellement entre 130°C et 250°C, par exemple par traversée d'un four-tunnel, typiquement de plusieurs mètres de long, tels que ceux utilisés couramment pour le traitement thermique après encollage des matériaux textiles par une colle RFL.

Puis, l'élément de renfort en acier revêtu anhydre ainsi obtenu subit un second traitement thermique pour terminer la réticulation de la composition adhésive, préférentiellement conduit à l'air dans un four tunnel tel que décrit ci-dessus. La température de traitement est de préférence comprise entre 150°C et 350°C. Les durées de traitement sont de quelques secondes à quelques minutes selon les cas (par exemple entre 10 s et 10 min).

L'homme du métier saura ajuster, le cas échéant, la température et la durée du traitement thermique ci-dessus, en fonction des conditions particulières de mise en oeuvre de l'invention, notamment de la nature exacte de la composition adhésive ou de la nature de l'acier. En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

L'épaisseur de la couche constituée de la composition adhésive revêtant chaque élément de renfort filaire est comprise dans un intervalle de valeurs allant de 5 à 100 µm, de préférence de 5 à 50 µm et plus préférentiellement de 10 à 35 µm.

Séparément, on prépare la composition de caoutchouc. La composition est fabriquée dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée Tmax) comprise entre 110°C et 190°C, de préférence entre 130°C et 180°C, suivie d'une seconde phase de travail mécanique (parfois qualifiée de phase"productive") à plus basse température, typiquement inférieure à 110°C, par exemple entre 60°C et 100°C, phase de finition au cours de laquelle est incorporé le système de réticulation ou vulcanisation ; de telles phases ont été décrites par exemple dans les documents précités EP 501227, EP 735088, WO00/05300, WO00/05301 ou WO02/083782.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base (élastomère diénique, charge inorganique renforçante et éventuels agents de couplage), puis dans un deuxième temps, par exemple après une à deux minutes de malaxage, les éventuels agents de recouvrement ou de mise en oeuvre complémentaires et autres additifs divers, à l'exception du système de réticulation ; lorsque la densité apparente de la charge inorganique renforçante est faible (cas général des silices), il peut être avantageux de fractionner son introduction en deux ou plusieurs parties. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion, dans la matrice élastomérique, de la charge inorganique renforçante et de ses éventuels agents de couplage. La durée totale du malaxage, dans cette phase non- productive, est de préférence comprise entre 2 et 10 minutes.

Après refroidissement du mélange ainsi obtenu, on incorpore alors le système de réticulation à basse température, généralement dans un mélangeur externe tel qu'un mélangeur à cylindres ; le tout est alors mélangé (phase productive) pendant quelques minutes, par exemple entre 5 et 15 minutes.

Puis, lors d'une étape ultérieure, on noie l'élément de renfort en acier revêtu dans une matrice de caoutchouc à base de la composition de caoutchouc décrite ci-dessus.

On pourra réaliser l'étape durant laquelle on noie l'élément de renfort en acier revêtu de la composition adhésive dans la matrice de caoutchouc de préférence par calandrage de plusieurs éléments de renfort en acier revêtus entre deux bandes de la matrice de caoutchouc. Toutefois, d'autres procédés, connus par l'homme du métier, peuvent être employés.

Ultérieurement à l'étape durant laquelle on noie l'élément de renfort en acier revêtu de la composition adhésive dans la matrice de caoutchouc, on réticule par cuisson, de préférence sous pression, le composite ainsi formé. La réticulation est conduite de manière connue à une température généralement comprise entre 130°C et 200°C, de préférence sous pression, pendant un temps suffisant qui peut varier en fonction notamment de la température de cuisson, du système de réticulation adopté, de la cinétique de réticulation de la composition considérée ou de la taille du pneumatique.

L'invention s'applique donc à tout type de composite de caoutchouc susceptible d'être obtenu par le procédé précédemment décrit, comportant au moins une matrice de caoutchouc, notamment d'élastomère diénique, liée à l'élément de renfort en acier via une interphase adhésive à base de la composition adhésive.

### III - PNEUMATIQUE

Le composite décrit ci-dessus est avantageusement utilisable pour le renforcement de pneumatiques de tous types de véhicules, en particulier véhicules tourisme ou véhicules industriels tels que Poids-lourd.

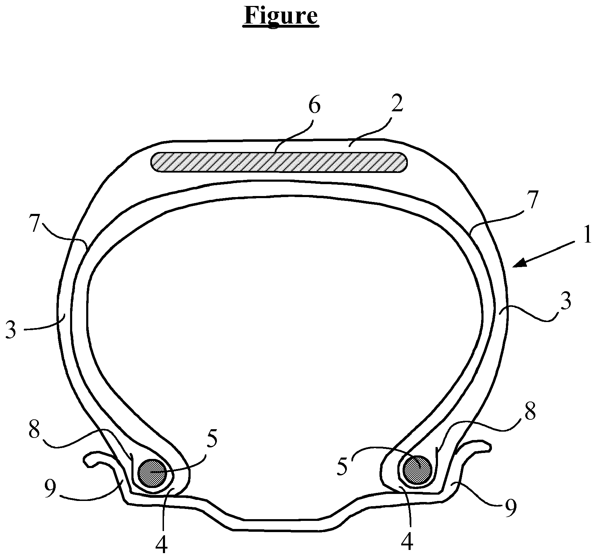

A titre d'exemple, la figure unique annexée représente de manière très schématique (sans respect d'une échelle spécifique), une coupe radiale d'un pneumatique conforme à l'invention pour véhicule du type poids lourd.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique qu'au moins une armature de sommet 6 et/ou son armature de carcasse 7 comporte un composite selon l'invention. Selon un autre exemple de mode de réalisation possible de l'invention, ce sont par exemple les tringles 5 qui pourraient être constituées, en tout ou partie, d'un élément de renfort en acier revêtu formant ainsi un composite selon l'invention.

Bien entendu, l'invention concerne les objets précédemment décrits, à savoir le composite en caoutchouc tel que pneumatique le comportant, tant à l'état cru (avant cuisson ou vulcanisation) qu'à l'état cuit (après cuisson).

### IV - EXEMPLES DE REALISATION DE L'INVENTION ET ESSAIS COMPARATIFS

Plusieurs compositions adhésives, notées ci-après C-1.1 à C-1.7, ont été préparées comme indiqué précédemment. Leurs formulations (exprimées en pourcentage en poids) sont présentées dans le tableau 1 annexé. Les quantités répertoriées dans ce tableau sont celles des constituants à l'état sec, ramenées à un total de 100 parties en poids de composition adhésive (c'est-à-dire les constituants plus l'eau).

Chaque composition adhésive C-1.1 à C-1.7 est à base d'un aldéhyde aromatique dont le noyau est porteur de deux fonctions aldéhydes.

Les aldéhydes des compositions C-1.1 à C-1.6 sont choisis dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés. En l'espèce, l'aldéhyde est choisi dans le groupe constitué par le 1,2-benzène-dicarboxaldéhyde, le 1,3-benzène-dicarboxaldéhyde et le 1,4-benzène-dicarboxaldéhyde.

L'aldéhyde de la composition C-1.7 est choisi dans le groupe constitué par le furfuraldéhyde, le 2,5-furanedicarboxaldéhyde et les mélanges de ces composés. En l'espèce, l'aldéhyde est le 2,5-furanedicarboxaldéhyde.

Les polyphénols des compositions C-1.1 à C-1.7 comporte un ou plusieurs noyau(x) aromatique(s), étant entendu que :
o dans le cas d'un seul noyau aromatique (cas du phloroglucinol et du résorcinol), ce dernier est porteur de deux ou trois fonctions hydroxyles en position méta l'une par rapport à l'autre ou les unes par rapport aux autres, le reste du noyau aromatique étant non substitué ;
o dans le cas de plusieurs noyaux aromatiques (cas du 2,2',4,4'-tétrahydroxydiphényl sulfide, du phloroglucide et du Morin), au moins deux d'entre eux sont chacun porteur de deux ou trois fonctions hydroxyles en position méta l'une par rapport à l'autre ou les unes par rapport aux autres, étant entendu que les deux positions en ortho d'au moins une de ces fonctions hydroxyles sont non substituées.

Ces compositions adhésives C-1.1 à C-1.7 sont par ailleurs toutes à base de latex de caoutchouc naturel (NR), latex de copolymère styrène-butadiène (SBR) et de latex de vynilpyridine-styrène-butadiène (VP-SBR).

En outre, chaque composition C-1.1 à C-1.7 comprend une gélatine.

On a comparé ces compositions adhésives avec une composition C-1.0 connue de l'état de la technique et comprenant du formaldéhyde et du résorcinol (sous la forme d'une résine précondensée SFR 1524).

La qualité de la liaison entre la matrice de caoutchouc et l'élément de renfort en acier est déterminée par un test dans lequel on mesure la force nécessaire pour extraire un élément de renfort en acier constitué d'un unique élément de renfort filaire de diamètre égal à 1,75 mm de la matrice de caoutchouc vulcanisée.

On a testé :
- des éléments de renfort en acier dont l'acier de l'âme de l'élément de renfort filaire est dépourvu de couche de revêtement métallique et comprend moins de 0,5 % en masse de chrome et moins de 2% en masse de nickel (acier standard nu),
- des éléments de renfort en acier dont l'acier de l'âme de l'élément de renfort filaire est directement revêtu d'une couche d'un revêtement métallique. Le métal de la couche de revêtement métallique est choisi parmi le zinc, le cuivre, l'étain et les alliages de ces métaux, ici le métal est le zinc (acier zingué),
- des éléments de renfort en acier dont l'acier de l'âme de l'élément de renfort filaire est dépourvu de couche de revêtement métallique et comprend au moins 0,5 % borne incluse, de préférence au moins 5 % borne incluse et plus préférentiellement au moins 15 % borne incluse en masse de chrome, ici 18 % en masse de chrome et au moins 2% borne incluse, de préférence au moins 4% borne incluse et plus préférentiellement au moins 6% en masse de nickel, ici 8% en masse de nickel (acier inoxydable nu).

Chaque élément de renfort filaire testé est dépourvu de couche intermédiaire d'adhésion non métallique.

On a testé des composites de caoutchouc comprenant ces éléments de renfort en acier revêtus noyés dans une matrice de caoutchouc à base d'une composition A comprenant du caoutchouc naturel, du noir de carbone et des additifs usuels. En l'espèce, la composition A comprend 100 pce de caoutchouc naturel, 70 pce de noir de carbone série 300, 1,5 pce de N-1, 3-diméthylbutyl-N-phényl-para-phénylènediamine, 1 pce d'un sel de cobalt, et un système de réticulation comprenant 0,9 pce d'acide stéarique, 6 pce de soufre moléculaire insoluble, 0,8 pce de N-tertiarybutyl-2-benzothiazole sulfamide et 7,5 pce de ZnO.

On a également testé des composites de caoutchouc comprenant ces éléments de renfort en acier revêtus noyés dans une matrice de caoutchouc à base d'une composition B identique à la composition A à l'exception du taux de soufre moléculaire qui, dans la composition B, est égal à 2,2 pce.

On a revêtu l'élément de renfort filaire par chaque composition adhésive testée. Plus précisément, on a revêtu directement l'acier de l'âme (acier standard et acier inoxydable nu) et la couche de revêtement métallique (acier zingué) par chaque composition adhésive testée puis on a séché les éléments de renfort en acier ainsi revêtus dans un four de séchage à 180 °C pendant 30 s. Puis, la composition adhésive a été réticulée par passage des éléments de renfort en acier revêtus dans un four de traitement à 240 °C pendant 30 s. Puis, on a noyé chaque élément de renfort en acier ainsi revêtu dans chaque matrice à base de chaque composition A et B, grâce à un traitement thermique de vulcanisation, pour former des éprouvettes de composites comme décrit ci-dessous.

Plus précisément, la matrice de caoutchouc vulcanisée est un bloc de caoutchouc constitué de deux plaques de dimensions 200 mm par 12,5 mm et d'épaisseur 7 mm, appliquées l'une sur l'autre avant cuisson (l'épaisseur du bloc résultant est alors de 14 mm). C'est lors de la confection de ce bloc que les éléments de renfort en acier revêtus (15 tronçons au total) sont emprisonnés entre les deux plaques de caoutchouc à l'état cru, à égale distance et en laissant dépasser de part et d'autre de ces plaques une extrémité de l'élément de renfort en acier revêtu de longueur suffisante pour la traction ultérieure. Le bloc comportant les éléments de renfort en acier revêtus est alors placé dans un moule adapté puis cuit sous pression. La température et la durée de cuisson sont adaptées aux conditions de tests visées et laissées à l'initiative de l'homme de l'art ; à titre d'exemple, dans le cas présent, la cuisson du bloc est réalisée à 160°C pendant 20 min.

A l'issue de la cuisson, l'éprouvette ainsi constituée du bloc vulcanisé et des 15 tronçons d'éléments de renfort en acier revêtus est mise en place dans les mâchoires d'une machine de traction adaptée pour permettre de tester chaque tronçon isolément, à une vitesse et une température données (par exemple, dans le cas présent, à 100 mm/min et 23°C).

On caractérise les niveaux d'adhésion en mesurant la force dite d'arrachage (notée Fₘₐₓ) pour arracher les éléments de renfort en acier revêtus de l'éprouvette. Une valeur supérieure à celle de l'éprouvette témoin (correspondant à l'utilisation de la colle RFL classique C-1.0 et d'une matrice de caoutchouc à base de la composition A), arbitrairement fixée à 100, indique un résultat amélioré, c'est-à-dire une force d'arrachage supérieure à celle de l'éprouvette témoin. Les résultats des tests effectués sur les éprouvettes sont résumés dans le tableau 1. Lorsqu'on n'a pas effectué de test, on a indiqué la mention « NT » pour non testé.

Ces essais démontrent que, pour de l'acier standard nu et zingué, l'adhésion à une matrice de caoutchouc comprenant un système de réticulation comprenant un taux de soufre moléculaire allant de 1 à 5 pce, d'éléments de renfort en acier revêtus par une colle RFL classique, est détériorée par rapport à ces mêmes éléments de renfort en acier revêtus par une colle RFL noyés dans une matrice de caoutchouc comprenant un système de réticulation comprenant un taux de soufre moléculaire élevé.

On constate également que les éléments de renfort en acier revêtus avec les compositions adhésives C-1.1 à C-1.7 et noyés dans la matrice à base de la composition B présentent une force d'arrachage Fₘₐₓ équivalente, voire même supérieure par rapport :
- à la force d'arrachage Fₘₐₓ de ces mêmes éléments revêtus de la colle C-1.0 et noyés dans la matrice à base de la composition A,
- à la force d'arrachage Fₘₐₓ de ces mêmes éléments revêtus de la colle C-1.0 et noyés dans la matrice à base de la composition B.

Ainsi, on obtient une adhésion satisfaisante :
- sans pour autant utiliser une matrice de caoutchouc spécifique, de polymère halogéné et d'oxyde métallique,
- en disposant d'une matrice de caoutchouc présentant une durée de stockage relativement allongée par rapport à une matrice de caoutchouc à base d'une composition comprenant un système de réticulation comprenant un taux de soufre moléculaire élevé.

Parmi les autres avantages liés à l'invention, on notera que la composition adhésive peut être dépourvue de formaldéhyde dont il est souhaitable de diminuer l'utilisation, voire de la supprimer à terme dans les compositions adhésives, en raison de l'évolution récente de la réglementation européenne sur ce type de composé. En outre, le formaldéhyde est un composé dérivé du pétrole dont on souhaite le plus possible s'affranchir pour des raisons de raréfaction.

L'invention ne se limite pas aux modes de réalisation décrits précédemment.

On pourra également envisager de revêtir plusieurs éléments de renfort filaires comprenant chacun une âme en acier. Dans un mode de réalisation, on assemble les éléments de renfort filaires ensemble puis on revêt collectivement les éléments de renfort filaires par la composition adhésive. Dans un autre mode de réalisation, on revêt individuellement chaque élément de renfort filaire par la composition adhésive puis on assemble les éléments de renfort filaires ensemble.

On pourra également envisager l'utilisation d'éléments de renfort en acier revêtus comprenant une couche intermédiaire d'adhésion non métallique revêtant directement l'âme en acier des éléments de renfort filaires ou la couche de revêtement métallique, la couche de la composition adhésive revêtant alors directement cette couche intermédiaire d'adhésion non métallique ou la couche de revêtement métallique.

**Tableau 1**

| **Compositions adhésives** | **C-1.0** | **C-1.1** | **C-1.2** | **C-1.3** | **C-1.4** | **C-1.5** | **C-1.6** | **C-1.7** |
|---|---|---|---|---|---|---|---|---|
| **Aldéhyde** | | | | | | | | |
| 1,2-benzènedicarboxaldéhyde (1) | - | - | 0.9 | - | - | - | - | - |
| 1,3-benzènedicarboxaldéhyde (2) | - | - | - | - | 0.9 | - | - | - |
| 1,4-benzènedicarboxaldéhyde (3) | - | 0.9 | - | 0.9 | - | 0.9 | 0.9 | - |
| 2,5-funanedicarboxaldéhyde (4) | - | - | - | - | - | - | - | 0.9 |
| Formaldéhyde (5) | 0,71 | - | - | - | - | - | - | - |

| **Polyphénol** | | | | | | | | |
|---|---|---|---|---|---|---|---|---|
| Phloroglucinol (6) | - | 1.7 | - | - | - | - | - | - |
| 2,2',4,4'-tétrahydroxydiphényl sulfide (7) | - | - | 1.7 | 1.7 | - | - | - | - |
| Phloroglucide (8) | - | - | - | - | 1.7 | 1.7 | - | - |
| Morin (9) | - | - | - | - | - | - | 1.7 | |
| Résorcinol (10) | - | - | - | - | - | - | - | 1.7 |
| SRF 1524 (11) | 2,05 | | | | | | | |

| **Latex d'élastomères** | | | | | | | | |
|---|---|---|---|---|---|---|---|---|
| NR (12) | 6.4 | 6.4 | 6.4 | 6.4 | 6.4 | 6.4 | 6.4 | 6.4 |
| SBR (13) | 3.2 | 3.2 | 3.2 | 3.2 | 3.2 | 3.2 | 3.2 | 3.2 |
| VP-SBR (14) | 6.4 | 6.4 | 6.4 | 6.4 | 6.4 | 6.4 | 6.4 | 6.4 |

| **Additifs** | | | | | | | | |
|---|---|---|---|---|---|---|---|---|
| Hydroxyde de sodium (15) | 0.2 | 0.2 | 0.2 | 0.2 | 0.2 | 0.2 | 0.2 | 0.2 |
| Gélatine (16) | 1 | 1 | 1 | 1 | 1 | 1 | 1 | 1 |
| Ammoniaque (17) | 0.5 | 0.5 | 0.5 | 0.5 | 0.5 | 0.5 | 0.5 | 0.5 |
| Poids total d'extrait sec de composition adhésive | 19,5 | 20.3 | 20.3 | 20.3 | 20.3 | 20.3 | 20.3 | 20.3 |
| Poids d'eau | 80,5 | 79.7 | 79.7 | 79.7 | 79.7 | 79.7 | 79.7 | 79.7 |

| **Tests d'adhésion - Acier Standard nu** | | | | | | | | |
|---|---|---|---|---|---|---|---|---|
| Fₘₐₓ à 23°C (composition A) | 100 | / | / | / | / | / | / | / |
| Fₘₐₓ à 23°C (composition B) | 15 | 98 | NT | 87 | NT | NT | NT | 91 |

| **Tests d'adhésion - Acier zingué** | | | | | | | | |
|---|---|---|---|---|---|---|---|---|
| Fₘₐₓ à 23°C (composition A) | 100 | / | / | / | / | / | / | / |
| Fₘₐₓ à 23°C (composition B) | 50 | 291 | NT | 108 | NT | 122 | 97 | 231 |

| **Tests d'adhésion - Acier inoxydable nu** | | | | | | | | |
|---|---|---|---|---|---|---|---|---|
| Fₘₐₓ à 23°C (composition A) | 100 | / | / | / | / | / | / | / |
| Fₘₐₓ à 23°C (composition B) | 220 | 2741 | 1165 | 2110 | 1659 | 2083 | 2622 | 2080 |

| | | | | | | | | |
|---|---|---|---|---|---|---|---|---|
| (1) 1,2-benzènedicarboxaldéhyde (de la société ABCR ; de pureté 98%) ; (2) 1,3-benzènedicarboxaldéhyde (de la société ABCR ; de pureté 98%) ; (3) 1,4-benzènedicarboxaldéhyde (de la société ABCR ; de pureté 98%) ; (4) 2,5-Furanedicarboxaldéhyde (de la société Aldrich ; de pureté 97%) ; (5) Formaldéhdyde (de la société Caldic ; dilué à 36%) ; (6) Phloroglucinol (de la société Alfa Aesar ; de pureté 99%) ; (7) 2,2',4,4'-tétrahydroxydiphényl sulfide (de la société Alfa Aesar ; de pureté 98%) ; (8) Phloroglucide (de la société Alfa Aesar ; de pureté 95%) ; (9) Morin (de la société Fluka) ; (10) Résorcinol (de la société Sumitomo ; de pureté 99.5%) ; (11) Résine précondensée SRF 1524 (de la société Schenectady ; dilué à 75%) ; (12) Latex NR (« Trang Latex » de la société Bee tex ; dilué à 61% en poids) ; (13) Latex SBR (« Encord-201 » de la société Jubilant ; dilué à 41% en poids) (14) Latex Vinylpyridine-styrène-butadiène («VP 106S» de la société Eliokem ; dilué à 41%) ; (15) Hydroxyde de sodium (de la société Aldrich ; dilué à 30%) ; (16) Gélatine (Gélatine de peau de bovin de la société Aldrich) (17) Ammoniaque (de la société Aldrich ; diluée à 21%). | | | | | | | | |

## Revendications

1. Composite de caoutchouc renforcé d'au moins un élément de renfort en acier revêtu au moins en partie d'une couche adhésive, le composite de caoutchouc renforcé comprenant une matrice de caoutchouc dans laquelle est noyé l'élément de renfort en acier revêtu, **caractérisé en ce que** la couche adhésive comprend une composition adhésive comportant au moins une résine phénol-aldéhyde à base d'au moins :
- un aldéhyde aromatique porteur d'au moins une fonction aldéhyde, comprenant au moins un noyau aromatique;
- un polyphénol comportant un ou plusieurs noyau(x) aromatique(s), étant entendu que :
∘ dans le cas d'un seul noyau aromatique, ce dernier est porteur de deux ou trois fonctions hydroxyle en position méta l'une par rapport à l'autre ou les unes par rapport aux autres, le reste du noyau aromatique étant non substitué ;
∘ dans le cas de plusieurs noyaux aromatiques, au moins deux d'entre eux sont chacun porteur de deux ou trois fonctions hydroxyle en position méta l'une par rapport à l'autre ou les unes par rapport aux autres, étant entendu que les deux positions en ortho d'au moins une de ces fonctions hydroxyle sont non substituées.
et **en ce que** la matrice de caoutchouc est à base d'une composition de caoutchouc comprenant un système de réticulation comprenant un taux de soufre moléculaire allant de 1 à 5 pce.

2. Composite de caoutchouc selon la revendication précédente, dans lequel le taux de soufre moléculaire du système de réticulation de la composition de caoutchouc est inférieur ou égal à 4 pce, de préférence à 3 pce et plus préférentiellement à 2,5 pce.

3. Composite de caoutchouc selon l'une quelconque des revendications précédentes, dans lequel le taux de soufre moléculaire du système de réticulation de la composition de caoutchouc est supérieur ou égal à 1,5 pce, de préférence à 2 pce.

4. Composite de caoutchouc selon l'une quelconque des revendications précédentes, dans lequel l'élément de renfort en acier revêtu comprend un ou plusieurs éléments de renfort filaires comprenant chacun une âme en acier.

5. Composite de caoutchouc selon la revendication 4, dans lequel la couche adhésive revêt directement au moins une partie de l'âme en acier du ou de chaque élément de renfort filaire.

6. Composite de caoutchouc selon la revendication 4, dans lequel la couche adhésive revêt directement une couche d'un revêtement métallique revêtant directement au moins une partie de l'âme en acier du ou de chaque élément de renfort filaire.

7. Composite de caoutchouc selon la revendication précédente, dans lequel le métal de la couche du revêtement métallique revêtant directement au moins une partie de l'âme en acier du ou de chaque élément de renfort filaire est choisi parmi le zinc, le cuivre, l'étain et les alliages de ces métaux.

8. Composite de caoutchouc selon l'une quelconque des revendications 4 à 7, dans lequel la couche adhésive revêt directement une couche intermédiaire d'adhésion non métallique revêtant l'âme en acier du ou de chaque élément de renfort filaire.

9. Composite de caoutchouc selon l'une quelconque des revendications 1 à 8, dans lequel le noyau aromatique de l'aldéhyde aromatique est porteur de deux fonctions aldéhydes.

10. Composite de caoutchouc selon la revendication 9, dans lequel l'aldéhyde aromatique est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés.

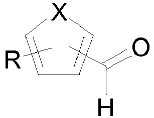

11. Composite de caoutchouc selon l'une quelconque des revendications 1 à 8, dans lequel l'aldéhyde est choisi dans le groupe constitué par le furfuraldéhyde, le 2,5-furanedicarboxaldéhyde et les mélanges de ces composés.

12. Composite de caoutchouc selon l'une quelconque des revendications précédentes, dans lequel le polyphénol est choisi dans le groupe constitué par le phloroglucinol, le 2,2',4,4'-tétrahydroxydiphényl sulfide et les mélanges de ces composés.

13. Procédé de fabrication d'un composite de caoutchouc, dans lequel on noie un élément de renfort en acier revêtu au moins en partie d'une couche adhésive dans une matrice de caoutchouc à base d'une composition de caoutchouc, **caractérisé en ce que** la couche adhésive comprend une composition adhésive comportant au moins une résine phénol-aldéhyde à base d'au moins :
- un aldéhyde aromatique porteur d'au moins une fonction aldéhyde, comprenant au moins un noyau aromatique;
- un polyphénol comportant un ou plusieurs noyau(x) aromatique(s), étant entendu que :
∘ dans le cas d'un seul noyau aromatique, ce dernier est porteur de deux ou trois fonctions hydroxyle en position méta l'une par rapport à l'autre ou les unes par rapport aux autres, le reste du noyau aromatique étant non substitué ;
∘ dans le cas de plusieurs noyaux aromatiques, au moins deux d'entre eux sont chacun porteur de deux ou trois fonctions hydroxyle en position méta l'une par rapport à l'autre ou les unes par rapport aux autres, étant entendu que les deux positions en ortho d'au moins une de ces fonctions hydroxyle sont non substituées.
et **en ce que** la composition de caoutchouc comprend un système de réticulation comprenant un taux de soufre moléculaire allant de 1 à 5 pce.

14. Utilisation, pour le calandrage d'un élément de renfort en acier revêtu au moins en partie d'une couche adhésive comprenant une composition adhésive comportant au moins une résine phénol-aldéhyde à base d'au moins :
- un aldéhyde aromatique porteur d'au moins une fonction aldéhyde, comprenant au moins un noyau aromatique;
- un polyphénol comportant un ou plusieurs noyau(x) aromatique(s), étant entendu que :
∘ dans le cas d'un seul noyau aromatique, ce dernier est porteur de deux ou trois fonctions hydroxyle en position méta l'une par rapport à l'autre ou les unes par rapport aux autres, le reste du noyau aromatique étant non substitué ;
∘ dans le cas de plusieurs noyaux aromatiques, au moins deux d'entre eux sont chacun porteur de deux ou trois fonctions hydroxyle en position méta l'une par rapport à l'autre ou les unes par rapport aux autres, étant entendu que les deux positions en ortho d'au moins une de ces fonctions hydroxyle sont non substituées,
d'une matrice de caoutchouc à base d'une composition de caoutchouc comprenant un système de réticulation comprenant un taux de soufre moléculaire allant de 1 à 5 pce,

15. Pneumatique comprenant au moins un composite de caoutchouc selon l'une quelconque des revendications 1 à 12.

## Patentansprüche

1. Kautschukverbundstoff, der mit mindestens einem Verstärkungselement aus Stahl verstärkt ist, das zumindest zum Teil mit einer Klebeschicht beschichtet ist, wobei der verstärkte Kautschukverbundstoff eine Kautschukmatrix umfasst, in die das beschichtete Verstärkungselement aus Stahl eingebettet ist, **dadurch gekennzeichnet, dass** die Klebeschicht eine Klebstoffzusammensetzung umfasst, die mindestens ein Phenol/Aldehydharz auf der Basis mindestens eines der Folgenden enthält:
- eines aromatischen Aldehyds, der mindestens eine Aldehydfunktion trägt und mindestens einen aromatischen Kern enthält;
- eines Polyphenols, das einen oder mehrere aromatische(n) Kern(e) enthält, mit der Maßgabe, dass:
∘ im Fall eines einzigen aromatischen Kerns dieser zwei oder drei Hydroxylfunktionen trägt, die jeweils in meta-Stellung in Bezug zueinander stehen, wobei der übrige aromatische Kern unsubstituiert ist;
∘ im Fall mehrerer aromatischer Kerne mindestens zwei von diesen jeweils zwei oder drei Hydroxylfunktionen tragen, die jeweils in meta-Stellung in Bezug zueinander stehen, mit der Maßgabe, dass die zwei Positionen in ortho zu mindestens einer dieser Hydroxylfunktionen unsubstituiert sind,
und dadurch, dass die Kautschukmatrix auf einer Kautschukzusammensetzung basiert, die ein Vernetzungssystem umfasst, das einen Anteil an molekularem Schwefel von 1 bis 5 phr (Teile pro hundert Teile Kautschuk) umfasst.

2. Kautschukverbundstoff nach dem vorhergehenden Anspruch, wobei der Anteil an molekularem Schwefel des Vernetzungssystems der Kautschukzusammensetzung kleiner als oder gleich 4 phr, vorzugsweise 3 phr und stärker bevorzugt 2,5 phr ist.

3. Kautschukverbundstoff nach einem der vorhergehenden Ansprüche, wobei der Anteil an molekularem Schwefel des Vernetzungssystems der Kautschukzusammensetzung größer als oder gleich 1,5 phr, vorzugsweise 2 phr ist.

4. Kautschukverbundstoff nach einem der vorhergehenden Ansprüche, wobei das beschichtete Verstärkungselement aus Stahl ein oder mehrere drahtförmige Verstärkungselemente umfasst, die jeweils einen Stahlkern umfassen.

5. Kautschukverbundstoff nach Anspruch 4, wobei die Klebeschicht mindestens einen Teil des Stahlkerns des oder jedes drahtförmigen Verstärkungselements direkt überzieht.

6. Kautschukverbundstoff nach Anspruch 4, wobei die Klebeschicht eine Schicht aus einer metallischen Beschichtung direkt überzieht, die mindestens einen Teil des Stahlkerns des oder jedes drahtförmigen Verstärkungselements direkt überzieht.

7. Kautschukverbundstoff nach dem vorhergehenden Anspruch, wobei das Metall der Schicht aus der metallischen Beschichtung, die mindestens einen Teil des Stahlkerns des oder jedes drahtförmigen Verstärkungselements direkt überzieht, aus Zink, Kupfer, Zinn und Legierungen dieser Metalle ausgewählt ist.

8. Kautschukverbundstoff nach einem der Ansprüche 4 bis 7, wobei die Klebeschicht eine nicht-metallische Zwischenklebeschicht direkt überzieht, die den Stahlkern des oder jedes drahtförmigen Verstärkungselements überzieht.

9. Kautschukverbundstoff nach einem der Ansprüche 1 bis 8, wobei der aromatische Kern des aromatischen Aldehyds zwei Aldehydfunktionen trägt.

10. Kautschukverbundstoff nach Anspruch 9, wobei der aromatische Aldehyd aus der Gruppe ausgewählt ist, die aus 1,2-Benzoldicarboxaldehyd, 1,3-Benzoldicarboxaldehyd, 1,4-Benzoldicarboxaldehyd, 2-Hydroxybenzol-1,3,5-tricarbaldehyd und den Gemischen dieser Verbindungen besteht.

11. Kautschukverbundstoff nach einem der Ansprüche 1 bis 8, wobei der Aldehyd aus der Gruppe ausgewählt ist, die aus Furfuraldehyd, 2,5-Furandicarboxaldehyd und den Gemischen dieser Verbindungen besteht.

12. Kautschukverbundstoff nach einem der vorhergehenden Ansprüche, wobei das Polyphenol aus der Gruppe ausgewählt ist, die aus Phloroglucin, 2,2',4,4'-Tetrahydroxydiphenylsulfid und den Gemischen dieser Verbindungen besteht.

13. Verfahren zur Herstellung eines Kautschukverbundstoffs, wobei man ein Verstärkungselement aus Stahl, das zumindest zum Teil mit einer Klebeschicht beschichtet ist, in eine Kautschukmatrix auf der Basis einer Kautschukzusammensetzung einbettet, **dadurch gekennzeichnet, dass** die Klebeschicht eine Klebstoffzusammensetzung umfasst, die mindestens ein Phenol/Aldehydharz auf der Basis mindestens eines der Folgenden enthält:
- eines aromatischen Aldehyds, der mindestens eine Aldehydfunktion trägt und mindestens einen aromatischen Kern enthält;
- eines Polyphenols, das einen oder mehrere aromatische(n) Kern(e) enthält, mit der Maßgabe, dass:
∘ im Fall eines einzigen aromatischen Kerns dieser zwei oder drei Hydroxylfunktionen trägt, die jeweils in meta-Stellung in Bezug zueinander stehen, wobei der übrige aromatische Kern unsubstituiert ist;
∘ im Fall mehrerer aromatischer Kerne mindestens zwei von diesen jeweils zwei oder drei Hydroxylfunktionen tragen, die jeweils in meta-Stellung in Bezug zueinander stehen, mit der Maßgabe, dass die zwei Positionen in ortho zu mindestens einer dieser Hydroxylfunktionen unsubstituiert sind,
und dadurch, dass die Kautschukzusammensetzung ein Vernetzungssystem umfasst, das einen Gehalt an molekularem Schwefel von 1 bis 5 phr umfasst.

14. Verwendung zum Kalandrieren eines Verstärkungselements aus Stahl, das zumindest zum Teil mit einer Klebeschicht beschichtet ist, die eine Klebstoffzusammensetzung umfasst, die mindestens ein Phenol/Aldehydharz auf der Basis mindestens eines der Folgenden enthält:
- eines aromatischen Aldehyds, der mindestens eine Aldehydfunktion trägt und mindestens einen aromatischen Kern enthält;
- eines Polyphenols, das einen oder mehrere aromatische(n) Kern(e) enthält, mit der Maßgabe, dass:
∘ im Fall eines einzigen aromatischen Kerns dieser zwei oder drei Hydroxylfunktionen trägt, die jeweils in meta-Stellung in Bezug zueinander stehen, wobei der übrige aromatische Kern unsubstituiert ist;
∘ im Fall mehrerer aromatischer Kerne mindestens zwei von diesen jeweils zwei oder drei Hydroxylfunktionen tragen, die jeweils in meta-Stellung in Bezug zueinander stehen, mit der Maßgabe, dass die zwei Positionen in ortho zu mindestens einer dieser Hydroxylfunktionen unsubstituiert sind,
einer Kautschukmatrix auf der Basis einer Kautschukzusammensetzung, die ein Vernetzungssystem umfasst, das einen Gehalt an molekularem Schwefel von 1 bis 5 phr umfasst.

15. Reifen, der mindestens einen Kautschukverbundstoff nach einem der Ansprüche 1 bis 12 umfasst.

## Claims

1. Rubber composite reinforced with at least one steel reinforcing element coated at least in part with an adhesive layer, the reinforced rubber composite comprising a rubber matrix in which the coated steel reinforcing element is embedded, **characterized in that** the adhesive layer comprises an adhesive composition comprising at least one phenol/aldehyde resin based on at least:
- one aromatic aldehyde bearing at least one aldehyde functional group, comprising at least one aromatic nucleus;
- one polyphenol comprising one or more aromatic nucleus/nuclei, it being understood that:
∘ in the case of just one aromatic nucleus, the latter bears two or three hydroxyl functional groups in the meta position with respect to each other or with respect to one another, the remainder of the aromatic nucleus being unsubstituted;
∘ in the case of several aromatic nuclei, at least two of them each bear two or three hydroxyl functional groups in the meta position with respect to each other or with respect to one another, it being understood that the two positions ortho to at least one of these hydroxyl functional groups are unsubstituted,
and **in that** the rubber matrix is based on a rubber composition comprising a crosslinking system comprising a content of molecular sulphur ranging from 1 to 5 phr.

2. Rubber composite according to the preceding claim, in which the content of molecular sulphur of the crosslinking system of the rubber composition is less than or equal to 4 phr, preferably less than or equal to 3 phr and more preferably less than or equal to 2.5 phr.

3. Rubber composite according to either one of the preceding claims, in which the content of molecular sulphur of the crosslinking system of the rubber composition is greater than or equal to 1.5 phr, preferably greater than or equal to 2 phr.

4. Rubber composite according to any one of the preceding claims, in which the coated steel reinforcing element comprises one or more threadlike reinforcing elements, each comprising a steel core.

5. Rubber composite according to Claim 4, in which the adhesive layer directly coats at least a portion of the steel core of the or each threadlike reinforcing element.

6. Rubber composite according to Claim 4, in which the adhesive layer directly coats a layer of a metal coating directly coating at least a portion of the steel core of the or each threadlike reinforcing element.

7. Rubber composite according to the preceding claim, in which the metal of the layer of the metal coating directly coating at least a portion of the steel core of the or each threadlike reinforcing element is chosen from zinc, copper, tin and the alloys of these metals.

8. Rubber composite according to any one of Claims 4 to 7, in which the adhesive layer directly coats a nonmetallic intermediate adhesive layer coating the steel core of the or each threadlike reinforcing element.

9. Rubber composite according to any one of the preceding claims, in which the aromatic nucleus of the aromatic aldehyde bears two aldehyde functional groups.

10. Rubber composite according to Claim 9, in which the aromatic aldehyde is selected from the group consisting of 1,2-benzenedicarboxaldehyde, 1,3-benzenedicarboxaldehyde, 1,4-benzenedicarboxaldehyde, 2-hydroxybenzene-1,3,5-tricarbaldehyde and the mixtures of these compounds.

11. Rubber composite according to any one of Claims 1 to 8, in which the aldehyde is selected from the group consisting of furfuraldehyde, 2,5-furandicarboxaldehyde and the mixtures of these compounds.

12. Rubber composite according to any one of the preceding claims, in which the polyphenol is selected from the group consisting of phloroglucinol, 2,2',4,4'-tetrahydroxydiphenyl sulphide and the mixtures of these compounds.

13. Process for the manufacture of a rubber composite, in which a steel reinforcing element coated at least in part with an adhesive layer is embedded in a rubber matrix based on a rubber composition, **characterized in that** the adhesive layer comprises an adhesive composition comprising at least one phenol/aldehyde resin based on at least:
- one aromatic aldehyde bearing at least one aldehyde functional group, comprising at least one aromatic nucleus;
- one polyphenol comprising one or more aromatic nucleus/nuclei, it being understood that:
∘ in the case of just one aromatic nucleus, the latter bears two or three hydroxyl functional groups in the meta position with respect to each other or with respect to one another, the remainder of the aromatic nucleus being unsubstituted;
∘ in the case of several aromatic nuclei, at least two of them each bear two or three hydroxyl functional groups in the meta position with respect to each other or with respect to one another, it being understood that the two positions ortho to at least one of these hydroxyl functional groups are unsubstituted,
and **in that** the rubber composition comprises a crosslinking system comprising a content of molecular sulphur ranging from 1 to 5 phr.

14. Use, for the calendering of a steel reinforcing element coated at least in part with an adhesive layer comprising an adhesive composition comprising at least one phenol/aldehyde resin based on at least:
- one aromatic aldehyde bearing at least one aldehyde functional group, comprising at least one aromatic nucleus;
- one polyphenol comprising one or more aromatic nucleus/nuclei, it being understood that:
∘ in the case of just one aromatic nucleus, the latter bears two or three hydroxyl functional groups in the meta position with respect to each other or with respect to one another, the remainder of the aromatic nucleus being unsubstituted;
∘ in the case of several aromatic nuclei, at least two of them each bear two or three hydroxyl functional groups in the meta position with respect to each other or with respect to one another, it being understood that the two positions ortho to at least one of these hydroxyl functional groups are unsubstituted,
of a rubber matrix based on a rubber composition comprising a crosslinking system comprising a content of molecular sulphur ranging from 1 to 5 phr.

15. Tyre comprising at least one rubber composite according to any one of Claims 1 to 12.
